(19) Europäisches Patentamt
European Patent Office
Office européen des brevets

(11) Publication number: **0 113 159**
**B1**

(12) **EUROPEAN PATENT SPECIFICATION**

(45) Date of publication of patent specification: **28.01.87**

(51) Int. Cl.$^4$: **H 01 M 10/52,** H 01 M 10/36

(21) Application number: **83304040.5**

(22) Date of filing: **12.07.83**

(54) **Zinc-bromine battery and operation thereof.**

(30) Priority: **01.12.82 US 445969**

(43) Date of publication of application:
**11.07.84 Bulletin 84/28**

(45) Publication of the grant of the patent:
**28.01.87 Bulletin 87/05**

(84) Designated Contracting States:
**AT BE CH DE FR GB LI**

(56) References cited:
**DE-A-2 444 147**
**DE-C- 921 929**
**FR-A-2 231 118**
**FR-A-2 403 593**
**US-A-3 848 065**
**US-A-4 113 924**

**CHEMICAL ABSTRACTS, vol. 80, no. 16, 22nd April 1974, page 128, no. 85238h, Columbus, Ohio, US**

(73) Proprietor: **Exxon Research and Engineering Company**
**P.O.Box 390 180 Park Avenue**
**Florham Park New Jersey 07932 (US)**

(72) Inventor: **Grimes, Patrick Gerard**
**504 Mountain Avenue**
**Westfield New Jersey (US)**

(74) Representative: **Pitkin, Robert Wilfred et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 113 159 B1

Courier Press, Leamington Spa, England.

## Description

Field of the Invention

This invention pertains to zinc-bromine battery systems, and more particularly to a method and apparatus for maintaining the pH value of zinc-bromine batteries.

Background of the Invention

The zinc-bromine battery has recently attracted much attention as a viable system for the future. The basic zinc bromine battery system is shown in a patent to A. Venero, Patent No. 4,105,829 issued August 8, 1978.

The zinc-bromine system comprises series of cells which are provided with circulating electrolyte. The electrolyte is stored in a reservoir when the battery system is quiescent.

During the operation of the zinc-bromine battery, small quantities of hydrogen are produced. This decomposition hydrogen acts to increase the pH of the system, which eventually leads to the formation of zinc oxide/hydroxide solids. These solids interfere with the performance of the battery, such that it becomes desirable to prevent this from ocurring.

The present invention consumes the formed hydrogen by reacting it with bromine to form acid before it can form the aforementioned solids. This prevents the pH from rising and forming the undesirable zinc oxide/hydroxide solids.

Discussion of Related Art

US—A—4,113,924 describes an electrochemical zinc-halogen cell, in which decomposition gaseous hydrogen is consumed by use of a charged auxiliary electrode.

The above-mentioned battery has several drawbacks, one of which is that the auxiliary electrode device will only work to a substantial degree in a sealed system, wherein there is sufficient hydrogen build-up, such that the hydrogen surrounds the electrode.

Such an auxiliary electrode device is closely cupped to and near the power electrodes in a cell. This would not be efficient in a circulating system, wherein the decomposition hydrogen is carried by the circulating electrolytes throughout the system to the gas space of the system in a thinly veiled manner.

FR—A—2,403,593 specifically discloses a method of operating a zinc chloride secondary battery in which the pH of the electrolyte is controlled. The method comprises converting at least a portion of hydrogen generated in association with chlorine during battery charging into hydrogen chloride and dissolving at least some of the hydrogen chloride in the electrolyte. The reaction may be catalysed; ultraviolet light being the catalytic means named. The disclosure states, without detail, that the hydrogen could be combined with bromine; and also states, without detail, that ultraviolet light is not the only usable catalyt means.

DE—A—2 444 147 discloses a secondary cell having a non-consumable silicon cathode, having either an electroconductive or electrocatalytic surface. The platinum group of metals are stated to be suitable for an electrocatalytic surface.

It is an object of this invention to provide an improved zinc-bromine battery system in which gaseous decomposition hydrogen is consumed.

In one aspect the invention provides a method of consuming gaseous decomposition hydrogen in a zinc-bromine battery system, whereby the pH of the system is substantially maintained at a desired value; characterised by the step of reacting the hydrogen with bromine within said zinc-bromine system in the presence of a catalyst which is supported on an electronically conductive substrate and which encourages formation of hydrogen and bromide ions, said catalyst being disposed at a gas/liquid interface of said system.

In another aspect the invention provides a zinc-bromine battery system which consumes gaseous decomposition hydrogen produced therein during use, whereby the pH of the system is substantially maintained at a desired value; characterised in that the system contains a catalyst which is supported on an electronically conductive substrate and which encourages formation of hydrogen and bromide ions for reaction therebetween; said catalyst being disposed at a gas/liquid interface of the system.

A catalyst for the purpose of forming hydrogen and bromide ions can comprise ruthenium, or platinum. Platinum, however, can find its way into the electrolyte, and eventually plate-out upon the zinc electrode. Therefore, ruthenium is preferred for long term systems, because of its inability to plate-out upon the zinc.

Other catalysts which can be used are calcined metal sulfides, high surface area activated carbon and oxide supported metals. The catalyst is easily employed by disposing it in the reservoir of the zinc-bromine circulating battery system. The catalyst can be disposed at the gas/liquid interface, or in either the gas or the liquid phase.

The invention will now be described with reference to the accompanying drawing, in which:—

Figure 1 is a schematic in situ view of the catalyst of the invention in the reservoir of the circulating battery system; and

Figure 2 is a schematic view of the chemical reaction which takes place about the catalyst of Figure 1.

Generally speaking, zinc bromine batteries produce small quantities of hydrogen. The net effect is the reaction:

$$Zn^{\circ} + 2H_2O \rightarrow Zn^{++} + 2OH^- + H_2 \qquad (1)$$

This results in an increase in the pH of the system. This could eventually lead to the formation of zinc oxide/hydroxide solids which would interfere with battery performance.

In a functioning zinc bromine battery equal quantities of zinc metal and bromine are produced in the charge process. Consumption of zinc by the above process leaves an equivalent

amount of bromine in the system. Reaction of the hydrogen with the bromine "left" behind will restore the pH through production of HBr, as detailed in the following equations:

$$H_2 + Br_2 \rightarrow 2HBr \rightarrow 2H^+ + 2Br^- \quad (2)$$

$$2H^+ + 2OH^- \rightarrow 2H_2O \quad (3)$$

The summation equations are thus:

$$Zn^\circ + 2H_2O \rightarrow H_2 + Zn^{++} + 2OH^- \quad (4)$$

$$H_2 + Br_2 \rightarrow 2H^+ + 2Br^- \quad (5)$$

$$2H^+ + 2OH^- \rightarrow 2H_2O \quad (6)$$

$$Zn^\circ + Br_2 \rightarrow Zn^{++} + 2Br^- \quad (7)$$

Hydrogen and bromine are combined in the presence of a catalyst, such as ruthenium, in accordance with the present invention.

Referring to Figure 1, a reservoir 10 of a zinc-bromine circulating battery system is shown. A catalyst 11 for encouraging hydrogen and bromide ions (ruthenium) is disposed at the gas/liquid interface within reservoir 10. The catalyst 11 is shown in greater detail in Figure 1a.

Hydrogen in the gas phase diffuses to the gas/liquid/catalyst 11 interface where hydrogen is oxidized to 2 protons with electron release to an electronically conductive substrate. The electrons are conducted to another region where bromine from the electrolyte is electrochemically converted to 2 bromide ions. The net reaction is:

$$H_2 + Br_2 \rightarrow 2H^+ + 2Br^- \quad (8)$$

The potential for this reaction is 1.08 volts. Hydrogen activation catalysts are needed at the interfacial region and correspondingly bromine activation catalysts in the electrolyte region. The catalytic activity need not be high since there is a high driving force (1.08 volts) in this system.

In a functioning battery system, the catalytic section could be floated on rafts at the gas/liquid interface in the battery reservoir as illustrated in Figure 1.

**Claims**

1. A method of consuming gaseous decomposition hydrogen in a zinc-bromine battery system, whereby the pH of the system is substantially maintained at a desired value; characterised by the step of reacting the hydrogen with bromine within said zinc-bromine system in the presence of a catalyst which is supported on an electronically conductive substrate and which encourages formation of hydrogen and bromide ions, said catalyst being disposed at a gas/liquid interface of said system.

2. A method as claimed in claim 1, wherein said catalyst comprises ruthenium.

3. A method as claimed in claim 1 or claim 2, wherein said catalyst is disposed in a reservoir of said system.

4. A zinc-bromine battery system which consumes gaseous decomposition hydrogen produced therein during use, whereby the pH of the system is substantially maintained at a desired value; characterised in that the system contains a catalyst which is supported on an electronically conductive substrate and which encourages formation of hydrogen and bromide ions for reaction therebetween; said catalyst being disposed at a gas/liquid interface of the system.

5. A zinc-bromine battery system as claimed in claim 4, wherein said catalyst comprises ruthenium.

6. A zinc-bromine battery system as claimed in claim 4 or claim 5, wherein said catalyst is disposed in a reservoir of said system.

**Patentansprüche**

1. Verfahren zum Verbrauch von gasförmigem Zersetzungs-Wasserstoff in einem Zink-Brom-Batteriesystem, wobei der pH des Systems im wesentlichen bei einem gewünschten Wert gehalten wird, gekennzeichnet durch die Reaktion von Wasserstoff mit Brom innerhalb des genannten Zink-Brom-systems in Gegenwart eines Katalysators auf einem elektronisch leitenden Substrat als Träger, welcher Katalysator die Bildung von Wasserstoff- und Bromidionen fördert, wobei der Katalysator an der Grenzfläche Gas/Flüssigkeit des genannten Systems angeordnet ist.

2. Verfahren nach Anspruch 1, worin der genannte Katalysator Ruthenium enthält.

3. Verfahren nach Anspruch 1 oder 2, worin der genannte Katalysator in einem Behälter des genannten Systems angeordnet ist.

4. Zink-Brom-Batteriesystem, welches gasförmigen Zersetzungswasserstoff, der während des Gebrauchs in diesem System gebildet wird, verbraucht, wobei der pH dieses Systems im wesentlichen auf einem gewünschten Wert gehalten wird, dadurch gekennzeichnet, daß das System einen Katalysator auf einem elektronisch leitenden Substrat als Träger enthält, welcher Katalysator die Bildung von Wasserstoff- und Bromidionen für die Reaktion zwischen den beiden fördert und wobei der genannte Katalysator an der Grenzfläche Gas/Flüssigkeit des Systems angeordnet ist.

5. Zink-Brom-Batteriesystem nach Anspruch 4, worin der genannte Katalysator Ruthenium enthält.

6. Zink-Brom-Batteriesystem nach Anspruch 4 oder 5, worin der genannte Katalysator in einem Behälter des genannten Systems angeordnet ist.

**Revendications**

1. Procédé de consommation de l'hydrogène gazeux de décomposition dans un système de baterie zinc-brome, par lequel le pH du système est sensiblement maintenu à une valeur désirée; caractérisée par l'étape de réaction de l'hydrogène avec le brome dans ledit système zinc-brome en présence d'un catalyseur sur un support qui est un substrat électroniquement conducteur et qui favorise la formation d'ions hydrogène et bromure, ledit catalyseur étant disposé à une interface gaz/liquide dudit système.

2. Procédé selon la revendication 1, dans lequel ledit catalyseur comprend du ruthénium.

3. Procédé selon l'une des revendications 1 ou 2, dans lequel ledit catalyseur est disposé dans un réservoir dudit système.

4. Système de batterie zinc-brome qui consomme l'hydrogène gazeux de décomposition qui y est produit durant l'utilisation, par lequel le pH du système est sensiblement maintenu à une valeur désirée; caractérisé en ce que le système contient un catalyseur sur un support qui est un substrat électroniquement conducteur et qui favorise la formation d'ions hydrogène et bromure pour qu'ils réagissent entre eux; ledit catalyseur étant disposé à une interface gaz/liquide du système.

5. Système de batterie zinc-brome selon la revendication 4, dans lequel ledit catalyseur comprend du ruthénium.

6. Système de batterie zinc-brome selon l'une des revendications 4 ou 5, dans lequel ledit catalyseur est disposé dans un réservoir dudit système.

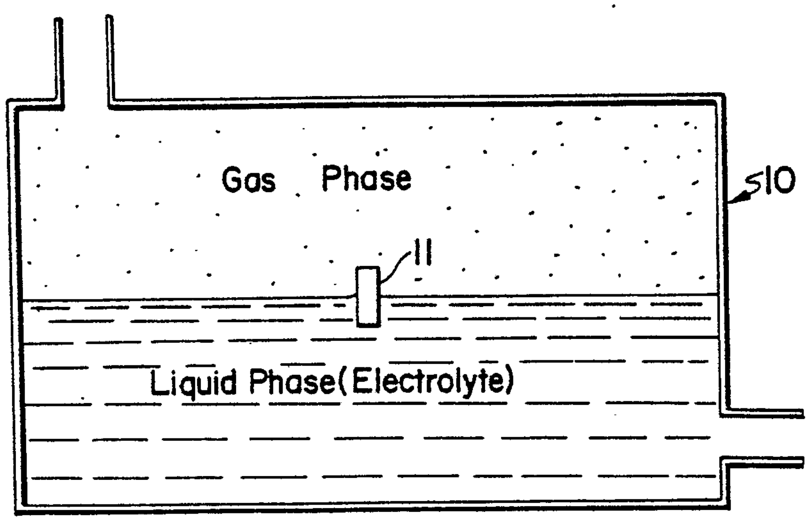
Gas Phase
10
11
Liquid Phase(Electrolyte)

FIG. 1

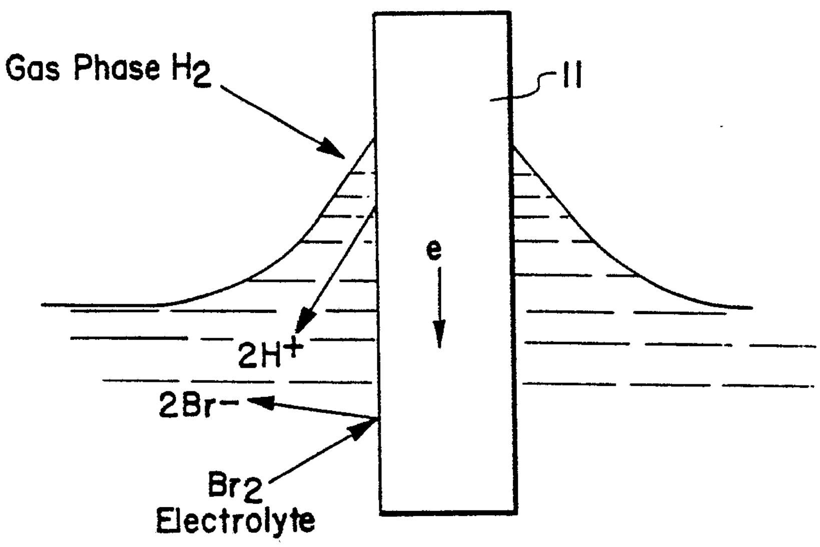
Gas Phase H2
11
e
2H+
2Br-
Br2
Electrolyte

FIG. 1a